# EUROPÄISCHE PATENTSCHRIFT

(11) **EP 2 068 214 B1**
(45) Veröffentlichungstag und Bekanntmachung des Hinweises auf die Patenterteilung: **28.10.2015**
(21) Anmeldenummer: 08020522.2
(22) Anmeldetag: 26.11.2008
(51) Int. Cl.: G05B 19/042, G06F 9/44

(54) **Grafische Programmerstellung durch Ableiten des Prozesssteuerungsablaufes aus der Zuordnung dynamischer Grafikobjekte**
Graphical programming by derivating the process control sequence from the connection of dynamic graphical objects
Programmation graphique déduisant la séquence de la commande de processus de la connection d'objets graphiques dynamiques

(30) Priorität: 03.12.2007 DE 102007058352
(43) Veröffentlichungstag der Anmeldung: 10.06.2009
(73) Patentinhaber: Phoenix Contact GmbH & Co. KG, 32825 Blomberg (DE)
(72) Erfinder: Kalhoff, Johannes, 32825 Blomberg (DE); Krumsiek, Dietmar, 31860 Emmerthal (DE)
(74) Vertreter: Blumbach Zinngrebe

(56) Entgegenhaltungen:
- WO-A-02/099546
- US-A- 5 168 441
- US-A1- 2003 184 595
- US-B1- 6 854 111

## Beschreibung

Die Erfindung betrifft ein Verfahren und ein System zur Konfiguration einer Steuerroutine zur Steuerung wenigstens einer realen oder virtuellen Prozesseinrichtungskomponente.

Bekanntermaßen werden Prozesse, welche stationäre und/oder mobile Prozesseinrichtungskomponenten umfassen, einschließlich Komponentengruppen und Funktionseinheiten, wie z.B. Anlagen oder Roboter oder Untereinheiten hiervon, seit einiger Zeit simuliert und Steuerungsroutinen werden über Programme sowie "teach-in"-Verfahren für deren zu steuernden Prozessablauf erstellt. Für die allgemeine Automatisierung jedoch ist derzeit noch keine gemeinsame Schnittstelle zwischen der mechanischen Konstruktion und also der dadurch insbesondere festgelegten Eigenschaft einer Prozesseinrichtungskomponente sowie der weitergehenden Konstruktion von deren Funktion und Funktionssteuerung bereitgestellt, wie zum Beispiel zwischen der mechanischen Konstruktion eines Förderbandes sowie deren Bewegung und Bewegungssteuerung.

In jüngerer Zeit werden Standards zur Geräte- und Funktionsbeschreibung definiert, welche das Ziel verfolgen, bestehende Werkzeuge einfacher zu koppeln. Dies löst zwar zum Teil das Problem, dass im wesentlichen bereits vorliegende Daten doppelt bereitgestellt, also insbesondere auch in Datenverarbeitungsgeräte eingegeben werden müssen, trägt jedoch im wesentlichen nur wenig zu einer Vereinfachung der einzelnen Arbeitsschritte von der mechanischen Konstruktion einer Prozesseinrichtungskomponente bis zur Erstellung einer Steuerungsroutine für diese bei.

US 6, 854, 111 B1 offenbart ein Bibliothekssystem zur Erstellung von Steuerungsprogrammen für Steuerungseinrichtungen, wobei vorgefertigte Programmfragmente vervielfältigt und zugeordnet werden sowie Variablen automatisch umbenannt werden.

WO 02/099546 A1 offenbart ein Verfahren zum Festlegen von automatisierten Prozessen durch Zuordnen von Objektschnittstellen von Prozessobjekten zu ausgewählten Schnittstellen von Programmstrukturen.

Eine Aufgabe der Erfindung besteht daher darin, die Anforderung an die einzelnen Arbeitsschritte bis hin zur Erstellung einer solchen Steuerungsroutine zu vereinfachen, vorzugsweise zumindest teilweise sogar zu eliminieren und bei der Erstellung der Steuerungsroutine hierfür den zu steuernden Prozessablauf auf Eigenschaften und/oder Funktionen der entsprechenden Prozesseinrichtungskomponenten und einen hierdurch vorgegebenen möglichen Steuerungsablauf zu beschränken.

Erfindungsgemäße Lösungen sind durch die Gegenstände der anhängenden unabhängigen Ansprüche 1 und 9 wiedergegeben, wobei bevorzugte und/oder zweckmäßige Ausführungsformen und Weiterbildungen Gegenstand der abhängigen Ansprüche sind.

Dementsprechend schlägt die Erfindung ein Verfahren gemäß Anspruch 1 und ein Systeme zur Konfiguration einer Steuerroutine zur Steuerung wenigstens einer realen oder virtuellen Prozesseinrichtungskomponente gemäß Anspruch 9 vor, bei denen eine Konstruktionsdatenbank einzurichten bzw. eingerichtet ist, wobei Konstruktionselemente definiert werden sowie Eigenschaften und/oder Funktionen beschrieben werden, die den Konstruktionselementen zugeordnet gespeichert werden, sowie Grafikobjekte beschrieben werden, die den Konstruktionselementen zugeordnet gespeichert werden und zwar derart, dass über die Konstruktionselemente auch eine Zuordnung zwischen Eigenschaften, Funktionen und Grafikobjekten gegeben ist.

Werden Konstruktionselemente ausgewählt, dann werden durch eine im Hintergrund steuernde Konfigurationsmaschine die diesen zugeordneten Grafikobjekte auf einer Anzeigeeinrichtung angezeigt, auf welcher angezeigte Grafikobjekte auch visuell miteinander integriert werden können.

In Reaktion auf eine solche visuelle Integration werden Bindungsverweise zum logischen Kappen oder logischen Einrichten von Zuordnungen zu über die Konstruktionselemente den Grafikobjekten zugeordneten Eigenschaften und/oder Funktionen in einer Bindungsdatenbank gespeichert und wobei die Konfiguration der Steuerungsroutine grafisch, und zwar durch virtuelle Konstruktion der zu steuernden, wenigstens einen Prozesseinrichtungskomponente und über die in der Konstruktionsdatenbank und der Bindungsdatenbank erfolgenden Zuordnungen eine Umsetzung der Steuerungsroutine in Programmcode bewirkt wird. Dieser kann anwendungsspezifisch für zentrale oder dezentrale Steuerungssysteme eingesetzt werden, als Zwischencode weitere Verwendung finden und/oder auch auf unterschiedlichen dezentralen Steuerungen, z.B. durch entsprechende Verteilung von einzelnen Programm-Fragmenten, eingesetzt werden.

Im einfachsten Fall kann die Bindungsdatenbank auch direkt ein Verweis oder mehrere Verweise sein und z.B. als Beschreibung in wenigstens einem Grafikobjekt und/oder in der Konstruktionsdatenbank enthalten sein.

Ein wesentlicher Vorteil der Erfindung liegt somit darin, dass der durch Programmierung automatisierbare Anteil eines Prozesses oder einer in den Prozess zu integrierenden Prozesseinrichtungskomponente weitgehend automatisch erstellbar ist, wobei ein wesentlicher Unterschied zum vorstehend beschriebenen Stand der Technik darin liegt, dass die erfindungsgemäßen Lösungen sich auf eine visuelle Umsetzung und Orientierung eines Benutzers stützen und jeweils die eingeschränkten Möglichkeiten von "Reaktionen auf Aktionen", beziehungsweise die durch gewisse Aktionen jeweils weiter eingeschränkten Möglichkeiten von Reaktionen, basierend auf realen Prozesseinrichtungskomponenten für deren virtuelle Konstruktion ausnutzen. Dies wird gemäß der Erfindung wesentlich durch die Zuordnung von Funktionen dynamischer Grafikobjekte und des hierdurch ermöglichten Ableitens eines in Folge quasi konstruierten Prozesssteuerungsablaufes erreicht. Ein diesen Prozesssteuerungsablauf comuter-lesbar umsetzender Programmcode kann dann einer Steuerungseinrichtung zur Steuerung einer der konstruierten entsprechenden, realen oder virtuellen Prozesseinrichtungskomponente eingesetzt werden.

Bei in praktischer Ausführung bevorzugten Ausführungsformen können Bindungsverweise von der Bindungsdatenbank an die Konstruktionsdatenbank übergeben werden und in Bezug auf Konstruktionselemente, Eigenschaften, Funktionen, Grafikobjekte und zuordnungen zur entsprechend erweiternden Einrichtung der Konstruktionsdatenbank gespeichert werden.

Hierdurch wird somit ermöglicht, basierend auf bereits vorgehaltenen Konstruktionselementen weitere Konstruktionselemente neu und im wesentlichen auch dauerhaft definieren zu können.

Zweckmäßig ist es ferner, über die in der Konstruktionsdatenbank und der Bindungsdatenbank erfolgenden zuordnungen automatisiert eine Auswahl von möglichen, visuell zu integrierenden Konstruktionselementen zur virtuellen Konstruktion der Prozesseinrichtungskomponente durchzuführen und einem Benutzer entsprechend anzuzeigen.

Zweckmäßig ist ferner, wenn Grafikobjekte benutzerbedingt und/oder computerbedingt bzw. automatisch über die Anzeigeeinrichtung, beispielsweise mittels eines entsprechenden Auswahlmenüs, visuell miteinander integriert werden können.

Mit in der Konstruktionsdatenbank vordefinierten Konstruktionselementen und Zuordnungen zwischen Eigenschaften, Funktionen und Grafikobjekten kann somit eine Prozesseinrichtungskomponente individuell und/oder sich nacheinander bedingenden oder ausschließenden Zuordnungen virtuell konstruiert werden und auch neue Konstruktionselemente und Zuordnungen zwischen Eigenschaften, Funktionen und Grafikobjekten zur virtuellen Konstruktion von Prozesseinrichtungskomponenten beschrieben und entsprechend gespeichert werden.

In bevorzugter Ausführung werden die durch grafische Konstruktion konfigurierte und in Programmcode umzusetzende Steuerungsroutinen zunächst visuell einander zeitlich zugeordnet und für und durch den Benutzer visuell in einem Prozesssteuerungsablauf zusammengeführt. In weiterer bevorzugter Ausführung ist die Konfigurationsmaschine angepasst, dass die Konstruktionsdatenbank und/oder Bindungsdatenbank mit externen Datenquellen gekoppelt werden können, so dass Beschreibungsdaten hinsichtlich bestimmter Eigenschaften und/oder Funktionen auch von realen oder bereits simulierten Prozesseinrichtungskomponenten übernommen werden können, zum Beispiel mittels Datenhandschuhen oder Simulationsprogrammen.

Für eine visuelle Einbindung der, einzelnen Konstruktionselementen zugeordneten Eigenschaften und/oder Funktionen in die Grafikobjekte werden diese zweckmäßig in Text geschrieben, beispielsweise mittels Vektorgrafiken, XML oder SVG, so dass Informationen betreffend eigenschafts-, funktions- und/oder ortsbezogene zuordnungen unmittelbar in den Grafikobjekten enthalten sind.

Einmal konfigurierte Steuerungsroutinen werden in praktischer Ausführung in einer Automatisierungsdatenbank gespeichert und können zur automatisierten Ausführung von, einer konstruierten oder zu konstruierenden Prozesseinrichtungskomponente zugewiesenen Funktionen durch den Benutzer ausgewählt oder auch bevorzugt durch die Konfigurationsmaschine selbständig vorgeschlagen werden.

Wesentliche Merkmale und sich hieraus ergebende Vorteile der Erfindung sind folglich darin zu sehen, dass Funktionen von Prozesseinrichtungskomponenten mittels Grafikobjekten direkt am virtuellen, konstruierten Funktionsort dargestellt werden, d. h. durch die visuelle Integration von Grafikobjekten, welche den, jeweilige Prozesseinrichtungsmerkmale repräsentierenden Konstruktionselementen zugeordnet sind. Die Eigenschaften und Funktionen einer durch ein Grafikobjekt abgebildeten Prozesseinrichtungskomponente sowie in praktischer Weise auch in gleichen hierarchischen Ebenen in der Konfigurations- und/oder Bindungsdatenbank einander dynamisch zugeordnet gespeicherte Alternativen können visuell dargestellt, bedient und benutzt werden. Im Gegensatz zu herkömmlichen Programmierungssystemen bilden bei den Verfahren und Systemen nach der Erfindung die Beschreibungen der Funktionen und/oder Eigenschaften die tatsächlichen mechanischen beziehungsweise physikalischen Gegebenheiten von Prozesseinrichtungsmerkmalen einer Prozesseinrichtungskompenente ab, so dass diese Gegebenheiten in Folge die Grundlage für die Konfiguration entsprechender Steuerroutinen bilden.

Der Benutzer wird somit in die Lage versetzt, eine Prozesseinrichtungskomponente virtuell auf der mechanischen Ebene zu konstruieren und die jeweiligen physikalischen Möglichkeiten daraufhin zuzuordnen. So kann ein Benutzer, zum Beispiel basierend auf der Problemstellung "ein Gut von A nach B" zu bewegen, zunächst durch Auswahl jeweiliger Konstruktionselemente in einem oder mehreren Schritten Eigenschaften einer hierfür geeigneten Prozesseinrichtungskomponente festlegen und anschließend Funktionen der Prozesseinrichtungskomponente als physikalische Größe, wie zum Beispiel Richtung, Beschleunigung, maximale Geschwindigkeit, etc., mittels weiterer Grafikobjekte, gegebenenfalls auch unter Einbindung von manuell einzugebenden Parameterwerten, festlegen und somit z.B. ein Förderband zunächst grundlegend mechanisch konstruieren und anschließend das Förderband entsprechend dessen weiterer gewünschter Funktion weitergehend konstruieren. In Abhängigkeit der einzelnen in der Bindungsdatenbank gespeicherten Bindungsverweise werden die mit der Konstruktion einander zugeordneten Eigenschaften und Funktionen in einem Prozesssteuerungsablauf zum "Bewegen des Guts von A nach B" zeitlich eingebunden, welches automatisch zu einem TaktZeit-Diagramm führt bzw. kann bei vorliegendem Takt-ZeitDiagramm der Prozesssteuerungsablauf hieraus abgeleitet werden, so dass das Ausführen dieser Funktionen, wie zum Beispiel das Starten und Stoppen eines Förderbandes dann automatisiert durch Anwenden der entsprechend konfigurierten und zweckmäßig gespeicherten Steuerungsroutine erfolgen kann.

Für zukünftige Automatisierungssysteme erschließen sich somit entlang der Wertschöpfungskette enorme Einsparpotentiale, welches anhand nachfolgender Ausführungsbeispiele zu detaillierteren Beschreibung der Erfindung unter Bezugnahme auf die beigefügten Zeichnungen ersichtlich wird. In den Zeichnungen zeigen:
- Fig. 1: eine schematische Prinzipskizze betreffend ein Ausführungsbeispiel zum Ableiten eines Prozesssteuerungsablaufs zur Konfiguration einer Steuerroutine durch Zuordnung von Funktionen unter Verwendung dynamischer Grafikobjekte,
- Fig. 2: eine schematische Prinzipskizze betreffend das Arbeiten mit bereits vordefinierten Mechatronik Konstruktionselementen, und
- Fig. 3: eine weitere schematische Prinzipskizze betreffend das Arbeiten mit mechanischen Konstruktionselementen.

Bevor nachfolgend auf die Figuren im einzelnen Bezug genommen wird, sei darauf hingewiesen, dass die erfindungsgemäße Konfiguration einer Steuerroutine für eine Steuerungseinrichtung zur Steuerung einer realen oder virtuellen Prozesseinrichtungskomponente grundsätzlich sich an die visuelle Orientierung des Benutzers anlehnt und aus den bei einer visuellen Orientierung virtuell konstruierten Prozesseinrichtungskomponente generierten Informationen durch Zusammenwirken einzelner, auch an und für sich bekannter, Werkzeuge mittels einer im Hintergrund die Konfigurationsprozesse steuernden Konfigurationsmaschine einen Prozesssteuerungsablauf ableitet und in einen computerlesbaren Programmcode umsetzt.

Da, wie einleitend darauf hingewiesen, der Begriff einer Prozesseinrichtungskomponente auch Komponentengruppen und Funktionseinheiten, wie z.B. Anlagen oder Roboter oder Untereinheiten hiervon, umfassen kann, kann somit je nach spezifischer Anwendung der Erfindung eine solche Steuerungseinrichtung zur Steuerung einer realen oder virtuellen Prozesseinrichtungskomponente Teil eines zentralen oder dezentralen Steuerungssystems sein und/oder auch dezentrale Steuerungen umfassen. Folglich kann der Programmcode anwendungsspezifisch für zentrale oder dezentrale Steuerungssysteme eingesetzt werden, auf unterschiedlichen dezentralen Steuerungen, z.B. durch entsprechende Verteilung von einzelnen Programm-Fragmenten, eingesetzt werden und/oder auch als Zwischencode weitere Verwendung finden. Ferner können durch Steuerung der konstruierten virtuellen Prozesseinrichtungskomponente auch anwendungsspezfische Simulationen durchgeführt werden.

Durch Anwendung der Erfindung kann somit ein durch Konstruktion zu entwickelnder Prozess oder Prozessabschnitt einer oder mehrerer Prozesseinrichtungskomponente(n) visuell mit Grafikobjekten auf einer Computeranzeige abgebildet werden und die den Grafikobjekten zugeordneten beziehungsweise in diesen enthaltenen Daten werden im Hintergrund direkt zur Programmerstellung eingesetzt.

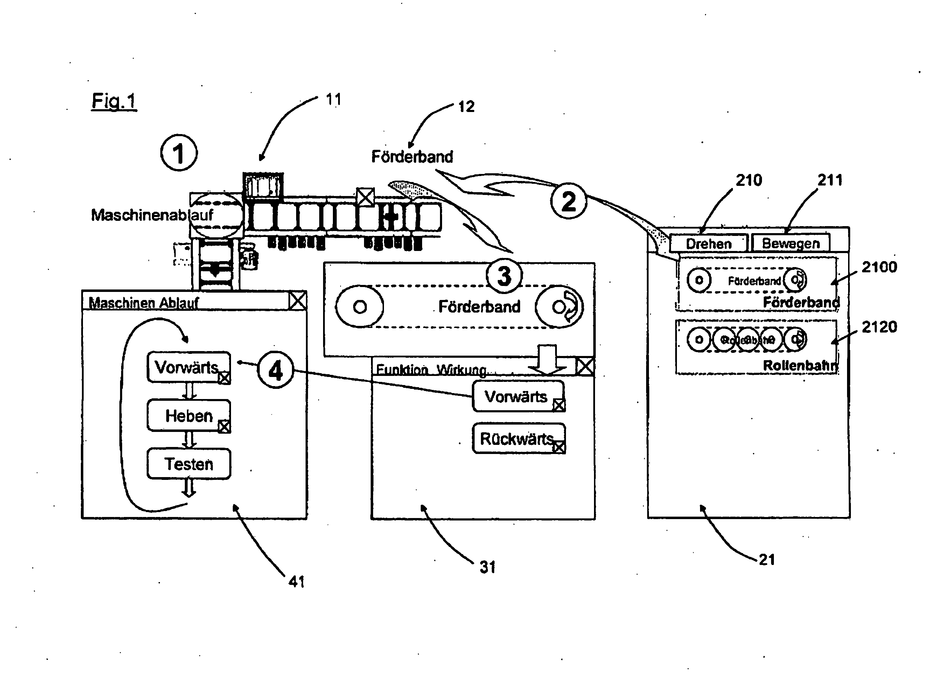

Gemäß Figur 1 wird in einem mit "1" gekennzeichneten Konfigurationsschritt ein Prozessabschnitt, im dargestellten Beispiel eine allgemeine Maschine zum Bewegen "eines Guts von A nach B" umfassend, visuell mit Grafikobjekten abgebildet. Die Grafikobjekte hierfür sind in einer in den Figuren nicht weiter dargestellten Konstruktionsdatenbank gespeichert. Die Konstruktionsdatenbank wurde eingerichtet, indem Konstruktionselemente, mit welchen bestimmte Prozesseinrichtungskomponenten konstruierbar sind, definiert wurden und Eigenschaften und/oder Funktionen sowie Grafikobjekte beschrieben wurden, die jeweils den Konstruktionselementen zugeordnet in der Konstruktionsdatenbank gespeichert sind. Über die Konstruktionselemente ist auch eine Zuordnung zwischen Eigenschaften, Funktionen und Grafikobjekten eingerichtet. Die Konfiguration des Steuerns des Prozesses und also der Maschine zum Bewegen "des Guts von A nach B" erfolgt durch mechanische Konstruktion von Prozesseinrichtungskomponenten mittels hierzu ausgewählten Konstruktionselementen und der visuellen Integration auf einer grafischen Anzeige von diesen zugeordneten Grafikobjekten, wie nachfolgend detaillierter beschrieben.

Die Konstruktion der Maschine innerhalb des Prozesses und somit deren Aufbau und Anordnung, kann zuvor bereits real erfolgt sein, wobei in diesem Fall die reale Konstruktion der Maschine mittels der den gespeicherten, vorgegebenen und/oder individuell generierten Konstruktionselementen zugeordneten Grafikobjekten entsprechend virtuell nachgebildet wird. Alternativ erfolgt die virtuelle Konstruktion mittels solcher den Konstruktionselementen zugeordneter Grafikobjekte unmittelbar am Computer. In beiden Fällen steuert eine entsprechend der nachfolgenden Beschreibung angepasste Konfigurationsmaschine den virtuellen Konfigurationsprozess. Die Konfigurationsmaschine selbst, kann somit z.B. ein entsprechend programmierter Mikroprozessor oder ähnliches sein, und ist in den Figuren nicht weiter dargestellt ist.

Auf solchen ausgewählten oder auszuwählenden Konstruktionselementen basierend und mittels der diesen Konstruktionselementen zugeordneten Grafikobjekte erfolgt daraufhin auf einer Anzeigeeinrichtung die ortsbezogene visuelle Integration der einzelnen Komponenten, also zunächst der Komponenten 11 und 12, z.B. eine allgemeine Ausgabeeinrichtung 11 zum Ausgeben eines Guts und eine nachfolgende Transportstrecke 12 zum Befördern eines Guts. Dies kann durch den Benutzer z.B. durch entsprechendes "Verschieben" der Grafikobjekte mittels an und für sich bekannter "Mausfunktionen" auf der Anzeigeeinrichtung durchgeführt werden. Die Grafikobjekte sind oder werden hierzu bevorzugt unter Verwendung von Vektorgrafiken generiert und gespeichert, so dass im wesentlichen alle notwendigen Informationen betreffend deren Eigenschaften zur Darstellung ortsbezogener Zuordnungen unmittelbar in den Grafikobjekten enthalten sind.

Anschließend werden im vorliegenden, bei Figur 1 darstellten Beispiel in einem mit "2" gekennzeichneten Konfigurationsschritt einzelne Konstruktionselemente, welche prozessspezifische Funktionseinheiten repräsentieren und durch Grafikobjekte dem Benutzer visuell angezeigt werden, aus der Konstruktionsdatenbank ausgewählt. Die repräsentierten Funktionseinheiten können mechanische, elektrische, elektronische, zeit- und/oder bedingungsbasierte Funktionseinheiten sein und sind zweckmäßig nach erstmaliger Generierung und Speicherung in einer Auswahlliste, welche auch Unterlisten umfassen kann, anzeigbar und können dort durch den Benutzer ausgewählt werden. So können derartige Auswahllisten, wie an für sich bekannt, z.B. über eine Menü-Ansicht aufgerufen werden.

Gemäß Figur 1 sei angenommen, dass die Transportstrecke 12 zum Befördern eines Guts als eine bestimmte Transportstreckeneinheit konstruiert werden soll.

In der bei Figur 1 dargestellten Auswahlliste 21 sind verschiedene Konstruktionselemente betreffend einer Transportstrecke zusammengefasst. So sind z.B. in einer Unterauswahlliste 210 zur Auswahlliste 21 verschiedene Dreheinheiten gespeichert und in einer weiteren Unterauswahlliste 211 verschiedene Bewegungseinheiten gespeichert. Wie bei Figur 1 zu sehen, umfasst die Unterauswahlliste 211 beispielsweise ein Konstruktionselement 2100, welches die Funktionseinheit eines Förderbandes repräsentiert, und ein Konstruktionselement 2120, welchem die Funktionseinheit einer Rollenbahn zugeordnet ist. Die Konstruktionselemente werden jeweils durch zugeordnete Grafikobjekte dem Benutzer visuell angezeigt. Ferner sind den Konstruktionselementen in der Konstruktionsdatenbank bereits mögliche Funktionen zugeordnet und mit den Grafikobjekten durch entsprechende Beschreibung bereits verbunden, z.B. mittels XML-Techniken bereits programmmäßig als eine mit in die Programmerstellung aufzunehmende Programmunterroutine.

Der Benutzer kann nunmehr zweckmäßigerweise einfach mittels Verwendung einer Computermaus die grafisch darstellten Konstruktionselemente auswählen und durch "Ziehen" beispielsweise des das Förderband repräsentierenden Grafikobjekts 2100 auf das allgemein die Transportstrecke 12 repräsentierende Grafikobjekt legen, woraufhin die Konfigurationsmaschine in Reaktion auf die visuelle Integration die jeweils den Grafikobjekten zugeordnet gespeicherten Eigenschaften und/oder Funktionen einander logisch zuordnet und miteinander verknüpft. Hierzu sieht die Erfindung vor, entsprechende Bindungsverweise zum logischen Kappen und/oder logischen Einrichten von Zuordnungen zu über die Konstruktionselemente den Grafikobjekten zugeordneten Eigenschaften und/oder Funktionen in einer Bindungsdatenbank zu speichern.
Im einfachsten Fall kann eine solche Bindungsdatenbank auch direkt ein Verweis oder mehrere Verweise sein und dann z.B. als Beschreibung in wenigstens einem Grafikobjekt und/oder in der Konstruktionsdatenbank gespeichert sein.

In einem mit "3" gekennzeichneten Konfigurationsschritt können daraufhin die durch die Grafikobjekte visuell dargestellten Funktionseinheiten, als z.B. die Funktionseinheit "Förderband", in deren zu verwendenden Funktionen, d.h. die gewünschten Wirkrichtungen, wie vorwärts oder rückwärts, Beschleunigungen, maximale Geschwindigkeit, etc. weitergehend parametriert werden. Auch diese sind wie vorstehend bereits erwähnt in praktischer Weise grundsätzlich bereits in der Konstruktionsdatenbank vorgehalten und sind zweckmäßig wiederum über eine entsprechende Auswahlliste 31, in einer der vorgehend in Bezug auf die Liste 21 beschriebenen weise ähnlichen Weise durch den Benutzer auswählbar.

Die ausgewählten Funktionen werden daraufhin von der Konfigurationsmaschine wiederum automatisch den zuvor ausgewählten Konstruktionselementen zugeordnet und die hierdurch erzeugten logischen Zuordnungen durch Bindungsverweise in der Bindungsdatenbank gespeichert.

In einem mit "4" gekennzeichneten Konfigurationsschritt können daraufhin die, einzelnen Funktionseinheiten zugewiesenen Funktionen visuell in einem Prozesssteuerungsablauf in zeitlicher Abfolge zusammengeführt und platziert werden, wobei der Prozesssteuerungsablauf bei Figur 1 auch mit "Maschinenablauf" bezeichnet ist. Die hierdurch durch grafische Konstruktion konfigurierte und in einem in einem Prozesssteuerungsablauf grafisch zusammengeführte Steuerungsroutine der für die im dargestellten Beispiel zu steuernden Prozesseinrichtungskomponente eines Förderbandes wird anschließend durch die von der Konfigurationsmaschine gesteuerte Editier-/Compiliereinrichtung mittels der über die Konstruktionsdatenbank und der Bindungsdatenbank erfolgten Zuordnungen in Programmcode umgesetzt und zweckmäßigerweise ebenfalls gespeichert. Einzelne einmal innerhalb eines gemäß der Erfindung konfigurierten Prozesssteuerungsablaufs platzierte Funktionen sind somit im wesentlichen zu jedem Zeitpunkt auch wieder aufrufbar und/oder änderbar. Hierzu werden von der Bindungsdatenbank gespeicherte Bindungsverweise an die Konstruktionsdatenbank übergeben, so dass auch die Konstruktionsdatenbank in Bezug auf Zuordnungen zwischen Konstruktionselementen, Eigenschaften, Funktionen und Grafikobjekten entsprechend erweiternd eingerichtet wird.

Da die durch den Benutzer visuell und grafisch auf der Anzeige zusammengeführten Funktionen die einzelnen Steuerungssequenzen für die Steuerungsroutine eindeutig definieren, und im Prozesssteuerungsablauf entsprechend des zu steuernden Prozesses und bezogen auf deren Anordnung, Funktion und zeitlichen Abfolge einander zugeordnet sind, können die den einzelnen zusammengeführten und visuell integrierten Grafikobjekten hinterlegten Informationen anschließend auf einfache Weise in computerlesbaren Programmcode umgesetzt werden.

Durch Zusammenfügen der Grafikobjekte auf der Anzeige konstruiert also der Benutzer aktiv virtuelle Prozesseinheiten, wobei über die hierdurch zusammengeführten Daten direkt das Programm zur entsprechenden Prozesssteuerung erstellt wird, ohne dass es einer weitergehenden Programmierung bedarf.

Die durch den Benutzer visuell integrierbaren Grafikobjekten enthalten somit in praktischer Weise visuelle Darstellungen von allen den jeweiligen Grafikobjekten hinterlegten bzw. zugeordneten Informationen zu wesentlichen Prozesseinrichtungsmerkmalen. Diese umfassen z.B. durch die Konstruktionselemente repräsentierte grundsätzliche Funktionseinheiten, wie bestimmte Maschinen und/oder Anlagenteile, diesen zugeordnete oder zuordenbare Eigenschaften, d.h. deren mechanischen Strukturen, und können darüber hinaus mit deren Funktionen bzw. Methoden, d.h. deren Verhalten, bereits automatisch belegt sein oder durch den Benutzer manuell belegt werden.

Die visuell miteinander integrierbaren Grafikobjekte umfassen somit je nach konstruierender Prozesseinrichtung statische und/oder dynamische Objekte und können somit beispielsweise technische Zeichnungen, Bilder, einschließlich animierte oder animierbare Bilder, Texte, Eigenschafts- und/oder Funktionsbeschreibungen, wie beispielsweise die Möglichkeiten eines Rechts- oder Linkslaufs, enthalten.

Folglich liegt es im Rahmen der Erfindung, dass Bilder von derartig visuell miteinander integrierbaren Grafikobjekten auch animiert und erfindungsgemäß konstruierte Prozesseinrichtungen entsprechend auch für Simulationen eingesetzt werden können.

Durch Anwendung der Erfindung können somit jeweils gewünschte oder benötigte Prozesseinrichtungskomponenten individuell konstruiert und miteinander in zeitlicher Abfolge verknüpft werden, wobei deren Eigenschaften und Funktionen mittels der gespeicherten Zuordnungen zusammen mit den Grafikobjekten über die Positionierung der Grafikobjekte direkt an dem visuell dargestellten Ort angezeigt werden, der dem Ort entspricht, an dem diese im Prozess tatsächlich zum Einsatz kommen sollen.

Das durch eine solche Integration aufgebaute Takt- und Zeitdiagramm kann folglich unmittelbar zur Umsetzung in computerlesbaren Programmcode von dem Programmeditor genutzt werden.

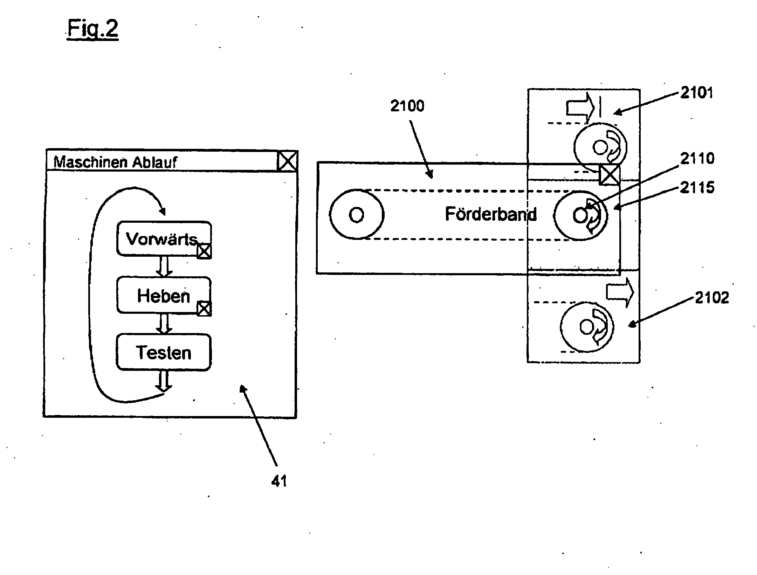

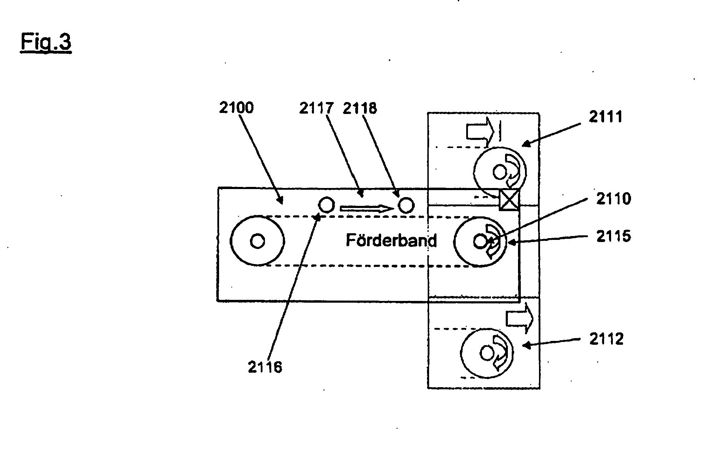

Die Erfindung ermöglicht somit ferner mittels vorstehend beschriebener Grafikobjekte das Arbeiten mit bereits vordefinierten Mechatronik-Elementen als auch das Arbeiten mit reinen Mechanik-Elementen, die in vom Benutzer vorgegebener Weise oder auch in durch die Konfigurationsmaschine automatisch vorgeschlagener Weise zusammensetzbar und/oder automatisch ausführbar sind, wie nachfolgend unter Bezugnahme auf Figuren 2 und 3 beschrieben wird.

Figur 2 zeigt hierzu eine schematische Prinzipskizze betreffend das Arbeiten mit vordefinierten Mechatronikelementen.

Bei Figur 2 stellt das Grafikobjekt 2100 wiederum das gemäß Figur 1 als Funktionseinheit eines Förderbandes ausgewählte Konstruktionselement dar. Es sei angenommen, dass die gemäß Figur 2 rechte mit 2110 gekennzeichnete Förderbandachse des Grafikobjekts 2100 für den Benutzer bei der nachfolgenden Erstellung einer Steuerungsroutine von besonderem Interesse ist.

Mögliche, dem Grafikobjekt in Bezug auf diese Achse zur Auswahl zuordnete Funktionen können zweckmäßigerweise einfach durch Überstreichen dieser Stelle auf der Anzeige mit der Maus grafisch visualisiert werden. Neben einer Computermaus kann hierzu beispielsweise auch ein berührungssensitiver Bildschirm eingesetzt werden. So werden gemäß Figur 2 beim Überstreichen der Stelle 2110 z.B. durch ein zusätzliches Grafikobjekt 2101 eine mögliche Stop- oder Endposition angezeigt und durch ein weiteres Grafikobjekt 2102 eine mögliche Förderrichtung. Die interessierenden Funktionen können daraufhin durch "Anklicken" des entsprechenden Grafikobjekts ausgewählt werden und durch "Ziehen" wiederum zur weiteren Konfigurationen in die Funktionseinheit übernommen werden, welches mit der Bezugsziffer 2115 für die angenommene Übernahme der im Grafikobjekt 2102 enthaltenen Funktion angezeigt wird. Als weitere Option kann die Funktionseinheit 2100 daraufhin mit der nunmehr übernommenen Funktion 2115 z.B. durch einen "Maus-Doppelklick" aktiviert werden, so dass dem Benutzer ein sich nach rechtsherum laufendes virtuelles Förderband angezeigt wird.

Diese in der Funktionseinheit 2100 nunmehr zusammengeführte und integrierte Funktion 2115 kann wiederum zur weiteren Verwendung bei der Erstellung der Steuerroutine, entsprechend der Beschreibung zu Figur 1, in dem Prozesssteuerungsablauf 41 an der zeitlichen Stelle, die die Funktionseinheit 2100 betrifft, durch visuelles "Hineinschieben" eingebunden werden und kann daraufhin direkt für die Umsetzung der entsprechend erstellten Steuerungsroutine im Programmcode übernommen werden.

Die somit über den Prozesssteuerungsablauf grafisch konfigurierte Steuerungsroutine wird zweckmäßigerweise wiederum in einer Automatisierungsdatenbank gespeichert und kann dann zur automatisierten Ausführung von diesen der konstruierten Prozesseinrichtungskomponente zugewiesenen Funktionen durch den Benutzer jederzeit wieder ausgewählt oder auch durch die Konfigurationsmaschine selbsttätig vorgeschlagen werden.

In alternativer Ausführung sind die einer Prozesseinrichtungskomponente möglichen Funktionen im Grafikobjekt auch gleichzeitig an verschiedenen Stellen durch unterschiedliche Animationen darstellbar. Zum Beispiel können in nicht dargestellter Abwandlung an der gemäß Figur 2 links dargestellten Förderbandachse die Linksdrehung und an der rechts dargestellten Förderbandachse die Rechtsdrehung angezeigt werden.

Nach entsprechender Auswahl einer bestimmten Funktion durch den Benutzer wird daraufhin die Aktivierung- oder Übernahme der ausgewählten Funktionen vom System gemäß der Erfindung automatisch bewirkt.

Figur 3 stellt eine weitere schematische Prinzipskizze betreffend das Arbeiten mit mechanischen Elementen dar, die in einer vom Benutzer vorgegebenen Weise automatisch zu Mechatronik-Elementen zusammengesetzt werden können.

Bei Figur 3 ist der Einfachheit halber wiederum das Grafikobjekt 2100 des die Funktionseinheit eines Förderbandes repräsentierenden Konstruktionselementes dargestellt. Es sei nunmehr angenommen, dass ein Benutzer bestimmte Funktionen dieser Funktionseinheit selbst definieren möchte und folglich die Erfindung zur Erstellung bestimmter (Unter)Steuerungssequenzen bzw. -routinen einsetzt.

Nach Auswahl dieser Funktionseinheit 2100, insbesondere entsprechend vorstehender Beschreibung über nicht dargestellte Menülisten oder mittels anderer Auswahlmittel werden dem Benutzer auf der Anzeige zunächst die möglichen Funktionen 2111 und 2112 angezeigt, die der zuvor ausgewählten Funktionseinheit gemäß Speicherung in der Konstruktionsdatenbank und/oder Bindungsbank zugeordnet sind.

Angenommen sei, dass der Benutzer bezogen auf die in Fig. 3 rechts dargestellte Förderbandachse 2110 mögliche Anfangs-, Stop- oder Endposition und/oder Bedingungen für eine Förderrichtung aufzeichnen möchte.

Der Benutzer wählt z.B. zunächst die Funktion 2112 aus und legt, wie mit der Bezugsziffer 2115 angezeigt grundsätzlich die Förderrichtung "rechts" fest. Ergänzend oder alternativ wählt er die Funktionen 2111, d.h. mögliche Anfangs-, Stop- oder Endposition, aus und startet daraufhin eine "Makro-Aufzeichnung". Innerhalb dieser können alle nachfolgend vom Anwender vorgegebenen Abläufe aufgezeichnet und nach Beendigung der "Makro-Aufzeichnung" als entsprechend "neue" der Funktionseinheit eindeutig zugeordnete (Unter)Steuerungsroutine in einer Automatisierungsdatenbank gespeichert werden. Diese "Makro-Aufzeichnung" kann sich auch als Prozesssteuerungsablauf 41 abbilden, welches dessen Erstellung weiter vereinfacht und ferner eine nochmals einfachere Modifikation der Makro-Aufzeichnung zulässt.

Zur Aufzeichnung selbst wird beispielsweise die Funktionseinheit 2100 an der mit 2116 gekennzeichneten Stelle "kontaktiert", also beispielsweise mittels der Computermaus "angeklickt". Anschließend kann eine gewünschte Funktion durch den Benutzer definiert werden, z.B. kann durch "Ziehen" des Punktes bzw. der Stelle 2116 in Richtung des Pfeils 2117 das Förderband nach rechts bewegt werden und diese Funktion wird dann z.B. an der mit 2118 gekennzeichneten Stelle durch Beendigung des "Zieh-Vorgangs" gestoppt, welches durch die im Hintergrund arbeitende Konfigurationsmaschine erkannt wird.

Vor, während und/oder nach der manuell durch den Benutzer ausgeübten Funktion können zweckmäßigerweise weitere Bedingungen, wie beispielsweise Anlaufbedingungen in Form eines Signals, Beschleunigung, usw., mögliche Ablaufbedingungen, wie z.B. Geschwindigkeit, Zeit usw., und je nach Ausführung mögliche weitere Bedingungen, wie z.B. ein kontinuierlicher Weiterlauf, oder das Einfügen eines Sensors, usw., ausgewählt werden, beispielsweise über eine nicht dargestellte entsprechende Auswahlliste oder akustisch oder auch über Tastatureingabe.

Stoppt der Benutzer die Makro-Aufzeichnung wird durch Vermittlung der Konfigurationsmaschine der entsprechende Prozesssteuerungsablauf erstellt.

Die Erfindung ermöglicht somit, dass durch Grafikobjekte virtuell darstellte Funktionseinheiten vom Anwender "geführt" werden können und somit das als Beispiel fungierende Förderband 2100 an im wesentlichen jeder beliebigen Stelle durch den Benutzer "angefasst" werden kann und durch das Verschieben des Förderbandes nach rechts oder links eine entsprechende Rechtsdrehung bzw. Linksdrehung erzeugt wird.

Die Erfindung bietet dem Benutzer somit eine Vielzahl von Automatisierungsmöglichkeiten, um direkt über die auf der Anzeige angezeigten Grafikobjekte die Erstellung einer Steuerungssequenz vorzunehmen.

Ergänzend oder alternativ zu vorstehend aufgezeigter Aufzeichnung von Steuerungssequenzen mittels direkter Einflussnahme auf die Grafikobjekte durch den Benutzer ist bei entsprechender Kopplung des erfindungsgemäßen Systems mit weiteren Datengeräten das erfindungsgemäße System ferner geeignet, die zur Aufzeichnung notwendigen Funktionsdaten, also beispielsweise gemäß Figur 3 Bewegungsdaten, von extern aufgezeichneten Daten zu übernehmen, z.B. über Datenträger mit zuvor darauf gespeicherten Simulationsdaten oder über einen Datenhandschuh, mittels welchem eine reale Konstruktion entsprechend in Bewegung versetzt wird oder z.B. über eine Datenverarbeitungseinrichtung zur Verarbeitung von optisch erfassten Bilddaten.

Den Grafikobjekten sind somit eindeutig Eigenschafts- und Funktions- bzw. Verhaltensbeschreibungen zugeordnet bzw. zuordenbar, die den jeweils realen Möglichkeiten entsprechen, wodurch das System in der Lage ist, virtuelle Prozesseinrichtungskomponenten realitätstreu darzustellen und mit den hierbei umfassten Daten direkt ein Programm zur Steuerung der realen oder auch virtuellen Prozesseinrichtung durch Ableiten von Prozesssteuerungsabläufen durch Zuordnen von Funktionen dynamischer Grafikobjekte zu erstellen. Von Vorteil ist somit, dass die physikalischen Eigenschaften und Funktionen der virtuell konstruierten Prozesseinrichtungskomponente folglich den physikalischen Eigenschaften und Funktionen einer entsprechenden realen Prozesseinrichtungskomponente entsprechen.

Wie zuvor am Beispiel eines Förderbandes beschrieben, können somit einzelne Funktion einer Prozesseinrichtungskomponente, also z.B. das Starten, Stoppen und die Bewegungsrichtung des Förderbandes, auf einfachste Weise durch den Benutzer als Automatisierungsfunktion grafisch programmiert werden. Für eine solche Automatisierungsfunktion erforderliche Automatisierungskomponenten können durch die steuernde Vermittlung der Konfigurationsmaschine auch automatisch vorgeschlagen und eingefügt werden, wobei sich das erfindungsgemäße System auch hierbei an den jeweiligen virtuellen und somit auch den realen Möglichkeiten entsprechenden Möglichkeiten und Bedingungen hierarchisch orientiert. Sind die jeweils möglichen Automatisierungsfunktionen bereits in den Beschreibungen, die den einzelnen Konstruktionselementen zugeordnet sind, als Automatisierungsfunktionen beschrieben, kann das erfindungsgemäße System diese auch völlig selbständig vorschlagen und somit die Konstruktion einer virtuellen Prozesseinrichtungskomponente selbständig für die Programmerstellung vollenden.

Wesentliche Kerne der Erfindung sind somit u.a. darin zu sehen, dass ausgewählte bzw. vorgesehene Funktionen von Prozesseinrichtungskomponenten mittels Grafikobjekten direkt am virtuellen Funktionsort darstellt werden und zwar durch visuelle Integration der Grafikobjekte selbst. Ferner können die Funktionen der den Grafikobjekten zugeordneten Prozesseinrichtungskomponenten und in einer gleichen hierarchischen Klasse eingeordnete alternative Funktionen visuell darstellt, bedient und genutzt werden.

Im Gegensatz zur herkömmlichen Programmierungstechniken bilden die in den Grafikobjekten enthaltenen Beschreibungen der Funktionen und/oder Eigenschaften die mechanischen bzw. physikalischen Gegebenheiten einer realen Prozesseinrichtungskomponente ab und sind somit eine wesentliche Grundlage der erfindungsgemäßen Programmierung. Zur Konfiguration einer Steuerroutine konstruiert der Benutzer lediglich die entsprechend gewünschte Prozesseinrichtungskomponente virtuell zunächst auf der mechanischem Ebene und ordnet daraufhin physikalische Möglichkeiten zu.

Wie vorstehend beschrieben, wird also beispielsweise auf der Problemstellung "ein Gut von A nach B" zu bewegen, der Benutzer zunächst die Eigenschaft einer hierfür geeigneten Prozesseinrichtungskomponente festlegen und anschließend die Funktion der Prozesseinrichtung als physikalische Größen mittels weiterer Grafikobjekte und/oder Parameterwerte festlegen und folglich ein Förderband zunächst grundlegend konstruieren und anschließend weitergehend konstruktiv ausgestalten.

Die jeweils einander zugeordneten Konstruktionselemente, Grafikobjekte und möglichen Eigenschaften zur virtuellen Konstruktion individueller Prozesseinrichtungskomponenten sowie die möglichen zugeordneten Funktionen sind oder werden in der Konstruktionsdatenbank gespeichert, wobei in Bezug auf zu einer ausgewählten Eigenschaft einer Prozesseinrichtungskomponente tatsächlich ausgewählte Funktionen in einer Bindungsdatenbank entsprechende Verweise zur logischen weiteren Zuordnung und Verknüpfung gespeichert werden. In Abhängigkeit dieser einzelnen Verweise werden die jeweiligen Funktionen, die mit einer ausgewählten Prozesseinrichtungskomponente anwendungsspezifisch verbunden werden in einem Prozessablauf zum "Bewegen des Guts von A nach B" zeitlich eingebunden, so dass dies automatisch zur einem Takt- und Zeitdiagramm führt. Das Ausführen solcher Funktionen, wie z.B. das Starten und Stoppen des Förderbandes kann dann automatisiert durch eine aufgezeichnete Automatisierungskomponente, welche wiederum den Funktionen und Eigenschaften zugeordnet ist, erfolgen.

Zusammenfassend kann festgehalten werden, das in den, von dem Benutzer zur Konstruktion auswählbaren Grafikobjekten Eigenschaften und den Eigenschaften wiederum zuordenbare Funktionen direkt enthalten oder auch Zeiger enthalten sind, die auf entsprechende Datenbankspeicherungen verweisen. Entsprechendes gilt für Animationseffekte sowie für weitere physikalische Fähigkeiten.

Die Grafiken selbst können in Text, auch auf an und für sich bekannte Techniken beschrieben sein, z.B. in Vektorgrafiken, XML, SVG (skalierbare Vektorgrafiken, welche eine zweidimensionale XML-Beschreibung von Bildern ist), usw..

Bei zusätzlichem Einsatz externer Datenquellen, wie beispielsweise eines Datenhandschuhs kann der Benutzer beispielsweise über eine 3D-Darstellung seiner virtuellen Prozesseinrichtungskomponente diese mittels der realen Komponente über den Datenhandschuh in Funktion versetzen. Er muss hierzu lediglich die reale Komponente auswählen, z.B. durch Antippen, um dessen mögliche Funktionen (z.B. Drehen an einer Achse) zu verwenden. Die Erfindung bietet dann automatisch die zur Verfügung stehenden Möglichkeiten, wie z.B. die Motor- bzw. Antriebsaktivierung zu einzelnen Funktionen an. Wird z.B. die sich so bewegende reale Prozesseinrichtungskomponente durch den konstruierenden Benutzer an einer bestimmten Stelle gestoppt, z.B. weil durch die reale Prozesseinrichtungskomponente bewegtes Gut an einer bestimmten Stelle angelangt ist, kann das System automatisch die entsprechenden Hilfsmittel zur Positionierung anbieten, also z.B. für eine Sensor- oder Signalerkennung. Die erstellten Bewegungs- und Funktionssequenzen werden aufgezeichnet und die Steuerungsroutine entsprechend automatisch erstellt.

Da folglich durch Anwendung der Erfindung auch der mechanische Konstrukteur und Prozesstechniker stärker eingebunden wird in die Programmerstellung wird die Programmerstellung bzw. Gestaltung und die Simulation weitgehend automatisch erzeugt. Ferner ist die Verwendung bestehender Elemente stark vereinfacht und in vielen Fällen kann auf die explizite Programmerstellung gänzlich verzichtet werden, welches Kosten spart und viele Konflikte bei der Konstruktion von Anlagen und Prozessen bereits frühzeitig aufdeckt, z.B. durch vorherige Simulation basierend auf der erfindungsgemäßen virtuellen Konstruktion.

## Patentansprüche

1. Verfahren zur Konfiguration einer Steuerungsroutine zur Steuerung wenigstens einer realen oder virtuellen Prozesseinrichtungskomponente, bei welchem:
zur virtuellen, grafischen Konstruktion auf mechanischer Ebene der wenigstens einen zu steuernden Prozessseinrichtungskomponente und zur Zuordnung von mechanischen bzw. physikalischen Prozesseinrichtungsmerkmalen
eine Konstruktionsdatenbank eingerichtet wird, indem Konstruktionselemente definiert werden, welche prozessspezifische Funktionseinheiten repräsentieren,
- Eigenschaften und/oder Funktionen beschrieben werden, die die tatsächlichen mechanischen bzw. physikalischen Prozesseinrichtungsmerkmale der entsprechenden zu steuernden realen oder virtuellen Prozesseinrichtungskomponente abbilden, und den Konstruktionselementen zugeordnet in der Konstruktionsdatenbank gespeichert werden,
**dadurch gekennzeichnet, dass**
Grafikobjekte (11, 12, 2100, 2120) beschrieben werden und den Konstruktionselementen zugeordnet in der Konstruktionsdatenbank gespeichert werden und zwar derart, dass über die Konstruktionselemente auch eine Zuordnung zwischen den Eigenschaften und/oder den Funktionen und den Grafikobjekten (11, 12, 2100, 2120) eingerichtet ist, die Prozesseinrichtungskomponente virtuell auf der mechanischen Ebene konstruierbar ist und die jeweiligen mechanischen bzw. physikalischen Prozesseinrichtungsmerkmale den Grafikobjekten (11, 12, 2100, 2120) zuordenbar sind, wobei
Konstruktionselemente aus der Konstruktionsdatenbank ausgewählt werden und die den ausgewählten Konstruktionselementen zugeordneten Grafikobjekte (11, 12, 2100, 2120) auf einer Anzeigeeinrichtung visuell angezeigt werden, und miteinander zur virtuellen Konstruktion der Prozesseinrichtungskomponente visuell integriert werden, und wobei
in Reaktion auf die visuelle Integration, die jeweils den Grafikobjekten (11, 12, 2100, 2120) zugeordnet gespeicherten Eigenschaften und/oder Funktionen einander logisch zugeordnet und miteinander verknüpft werden, indem entsprechende Bindungsverweise zum logischen Kappen oder logischen Einrichten von Zuordnungen zu über die Konstruktionselemente den Grafikobjekten (11, 12, 2100, 2120) zugeordneten Eigenschaften und/oder Funktionen in einer Bindungsdatenbank gespeichert werden, und wobei über die in der Konstruktionsdatenbank und der Bindungsdatenbank erfolgenden Zuordnungen und
Bindungsverweise eine Umsetzung der Steuerungsroutine in Programmcode, der zur Steuerung einer der konstruierten entsprechenden, realen oder virtuellen Prozesseinrichtungskomponente eingesetzt werden kann, bewirkt wird.

2. Verfahren nach Anspruch 1, wobei von der Bindungsdatenbank Bindungsverweise an die Konstruktionsdatenbank übergeben werden, und die Konstruktionsdatenbank in Bezug auf Konstruktionselemente, Eigenschaften, Funktion, Grafikobjekte (11, 12, 2100, 2120) und Zuordnungen entsprechend erweiternd eingerichtet wird.

3. Verfahren nach einem der vorstehenden Ansprüche, wobei über die in der Konstruktionsdatenbank und der Bindungsdatenbank erfolgenden Zuordnungen und Bindungsverweise automatisiert eine Auswahl von möglichen, visuell zu integrierenden Konstruktionselementen zur virtuellen Konstruktion der Prozesseinrichtungskomponente durchgeführt und dem Benutzer angezeigt wird.

4. Verfahren nach einem der vorstehenden Ansprüche, wobei die Grafikobjekte (11, 12, 2100, 2120) Benutzer bedingt und/oder Computer bedingt bzw. automatisch über die Anzeigeeinrichtung visuell miteinander integriert werden können.

5. Verfahren nach vorstehendem Anspruch, wobei die durch grafische Konstruktion konfigurierte und in programmcode umzusetzende Steuerungsroutine visuell wenigstens einer weiteren Steuerungsroutine zeitlich zugeordnet werden kann und mit dieser für und durch den Benutzer visuell in einem Prozesssteuerungsablauf zusammengeführt wird.

6. Verfahren nach einem der vorstehenden Ansprüche, wobei die Konstruktionsdatenbank und/oder Bindungsdatenbank mit externen Datenquellen gekoppelt werden.

7. Verfahren nach einem der vorstehenden Ansprüche, wobei die Grafikobjekten (11, 12, 2100, 2120) in Text beschrieben werden.

8. Verfahren nach einem der vorstehenden Ansprüche, wobei konfigurierte Steuerungsroutinen in einer Automatisierungsdatenbank gespeichert werden und zur automatisierten Ausführung von, einer konstruierten oder zu konstruierenden Prozesseinrichtungskomponente zugewiesenen Funktion durch den Benutzer ausgewählt oder durch das erfindungsgemäße System vorgeschlagen werden.

9. System zur Konfiguration einer Steuerungsroutine zur Steuerung wenigstens einer realen oder virtuellen Prozesseinrichtungskomponente, wobei das System umfasst,
eine Konfigurationsmaschine, die gekoppelt ist mit und ausgebildet ist zum Steuern von:
einer Konstruktionsdatenbank, die eingerichtet ist, derart, dass Konstruktionselemente definiert sind, welche prozessspezifische Funktionseinheiten repräsentieren,
sowie
Eigenschaften und/oder Funktionen beschrieben sind, die tatsächliche mechanische bzw. physikalische Prozesseinrichtungsmerkmale der entsprechenden zu steuernden realen oder virtuellen Prozesseinrichtungskomponente abbilden und den Konstruktionselementen zugeordnet gespeichert sind,
**dadurch gekennzeichnet, dass**
Grafikobjekte (11, 12, 2100, 2120) beschrieben sind, die den Konstruktionselementen zugeordnet und gespeichert sind, derart, dass über die Konstruktionselemente auch eine Zuordnung zwischen den Eigenschaften und/oder den Funktionen und den Grafikobjekten (11, 12, 2100, 2120) eingerichtet ist und die Prozesseinrichtungskomponente virtuell auf mechanischer Ebene konstruierbar ist und die jeweiligen mechanischen bzw. physikalischen Prozesseinrichtungsmerkmale den Grafikobjekten (11, 12, 2100, 2120) zuordenbar sind;
wobei die Konfigurationsmaschine ferner gekoppelt ist mit und ausgebildet ist zum Steuern von:
einer Auswahleinrichtung zur Auswahl der Konstruktionselemente;
einer Anzeigeeinrichtung zur visuellen Anzeige von den Konstruktionselementen zugeordneten Grafikobjekten (11, 12, 2100, 2120), wobei die Grafikobjekte miteinander zur virtuellen Konstruktion der Prozesseinrichtungskomponente visuell integriert werden;
einer Bindungsdatenbank, die zum Speichern von Bindungsverweisen zum logischen Kappen oder logischen Einrichten von Zuordnungen zu über die Konstruktionselemente den Grafikobjekten (11, 12, 2100, 2120) zugeordneten Eigenschaften und/oder Funktionen in Reaktion auf die visuelle Integration eingerichtet ist; und
einer Editier-/Compiliereinrichtung, die angepasst ist eine Konfiguration der Steuerungsroutine grafisch, durch virtuelle Konstruktion der zu steuernden wenigstens einen Prozesseinrichtungskomponente zu ermöglichen und über die in der Konstruktionsdatenbank und der Bindungsdatenbank erfolgenden Zuordnungen und Bindungsverweise eine Umsetzung der Steuerungsroutine in Programmcode, der zur Steuerung einer der konstruierten entsprechenden, realen oder virtuellen Prozesseinrichtungskomponente eingesetzt werden kann, zu bewirken.

10. System nach vorstehendem Anspruch, wobei die Bindungsdatenbank über die Konfigurationsmaschhine mit der Konstruktionsdatenbank zur Übergabe von gespeicherten Bindungsverweisen an die Konstruktionsdatenbank gekoppelt ist und die Konstruktionsdatenbank durch entsprechende Übernahme und Speicherung in Bezug auf die Speicherung von Konstruktionselemente, Eigenschaften, Funktion, Grafikobjekte (11, 12, 2100, 2120) und deren Zuordnungen erweiterbar ist.

11. System nach einem der zwei vorstehenden Ansprüche, wobei basierend auf in der Konstruktionsdatenbank und der Bindungsdatenbank erfolgenden Zuordnungen und Bindungsverweise mögliche, visuell zu integrierende Konstruktionselemente zur virtuellen Konstruktion der Prozesseinrichtungskomponente automatisiert auswählbar sind.

12. System nach einem der vorstehenden Ansprüche 9 bis 11, mit einem über die Konfigurationsmaschine gekoppelten Konfigurations- und Bindungstool zur Benutzer bedingten und/oder Computer bedingten visuellen Integration von Grafikobjekten (11, 12, 2100, 2120) über die Anzeigeeinrichtung.

13. System nach einem der vorstehenden Ansprüche 9 bis 12, ferner umfassen ein manipulierbares Anzeigemittel, mit welchen die durch grafische Konstruktion konfigurierte Steuerungsroutine visuell wenigstens einer weiteren Steuerungsroutine zeitlich zuordenbar ist, so dass die in Programmcode umzusetzende Steuerungsroutine für und durch den Benutzer visuell in einem Prozesssteuerungsablauf mit der wenigstens einen weiteren Steuerungsroutine zusammenführbar ist.

14. System nach einem der vorstehenden Ansprüche 9 bis 13, wobei die Konstruktionsdatenbank und/oder Bindungsdatenbank mit wenigstens einer externen Datenquelle zur Übernahme von Beschreibungsdaten auch von realen oder bereits simulierten Prozesseinrichtungskomponenten zumindest zeitweise gekoppelt ist.

15. System nach einem der vorstehenden Ansprüche 9 bis 14, angepasst zur Verarbeitung von textbasierten Grafikobjektbeschreibungen und von unmittelbar in den Grafikobjekten (11, 12, 2100, 2120) enthaltenen Informationen, insbesondere betreffend Orts- und Funktionsorts bezogene Zuordnungen.

16. System nach einem der vorstehenden Ansprüche 9 bis 15, umfassend eine Automatisierungsdatenbank, zur Speicherung von Steuerungsroutinen, welche zur automatisierten Ausführung von einer konstruierten Prozesseinrichtungskomponente zugewiesenen Funktion Benutzer bedingt oder Computer bedingt auswählbar bzw. abrufbar sind.

## Claims

1. Method for configuring a control routine for controlling at least one real or virtual process set-up component, wherein:
for the virtual, graphical structuring on the mechanical plane of the at least one process set-up component to be controlled and for the allocation of mechanical or physical process set-up features
- a structural database is set up, in that structural elements are defined which represent process-specific functional units,
- properties and/or functions are described which represent the actual mechanical or physical process set-up features of the corresponding real or virtual process set-up component to be controlled and are stored, being allocated to the structural elements, in the structural database,
**characterised in that**
graphical objects (11, 12, 2100, 2120) are described and are stored, being allocated to the structural elements, in the structural database such that the structural elements are also used to set up an allocation between the properties and/or functions and the graphical objects (11, 12, 2100, 2120), the process set-up component can be virtually structured on the mechanical plane and the respective mechanical or physical process set-up features can be allocated to the graphical objects (11, 12, 2100, 2120), wherein structural elements are selected from the structural database and the graphical objects (11, 12, 2100, 2120) allocated to the selected structural elements are visually displayed on a display device and are visually integrated together for the virtual structuring of the process set-up component, and wherein
in response to the visual integration, the stored properties and/or functions allocated to each of the graphical objects (11, 12, 2100, 2120) are logically allocated to each other and linked with each other, **in that** corresponding linking references for logically severing or logically setting up allocations to properties and/or functions allocated to the graphical objects (11, 12, 2100, 2120) via the structural elements are stored in a linking database, and wherein the allocations and linking references occurring in the structural database and linking database are used to implement a conversion of the control routine into program code which can be used to control one of the structured, corresponding, real or virtual process set-up components.

2. Method as claimed in claim 1, wherein linking references are transferred from the linking database to the structural database and the structural database is set up in a correspondingly expanding manner in terms of structural elements, properties, function, graphical objects (11, 12, 2100, 2120) and allocations.

3. Method as claimed in any one of the preceding claims, wherein via the allocations and linking references occurring in the structural database and the linking database, a selection of possible structural elements to be visually integrated is automatically performed and displayed to the user for the virtual structuring of the process set-up component.

4. Method as claimed in any one of the preceding claims, wherein the graphical objects (11, 12, 2100, 2120) can be visually integrated with each other via the display device in a user-initiated manner and/or in a computer-initiated manner or automatically.

5. Method as claimed in the preceding claim, wherein the control routine configured by graphical structuring and to be converted into program code can be temporally allocated visually at least to a further control routine and is visually combined therewith for and by the user in a process control sequence.

6. Method as claimed in any one of the preceding claims, wherein the structural database and/or linking database is/are coupled to external data sources.

7. Method as claimed in any one of the preceding claims, wherein the graphical objects (11, 12, 2100, 2120) are described in the form of text.

8. Method as claimed in any one of the preceding claims, wherein configured control routines are stored in an automation database and are selected by the user, or proposed by the system in accordance with the invention, for automatically performing a function assigned to a process set-up component which is structured or is to be structured.

9. System for configuring a control routine for controlling at least one real or virtual process set-up component, wherein the system includes
a configuration machine which is coupled to and is formed for controlling:
a structural database which is set up such that structural elements are defined which represent process-specific functional units and
properties and/or functions are described which represent actual mechanical or physical process set-up features of the corresponding real or virtual process set-up component to be controlled and are stored allocated to the structural elements,
**characterised in that**
graphical objects (11, 12, 2100, 2120) are described which are allocated to the structural elements and are stored such that
the structural elements are also used to set up an allocation between the properties and/or functions and the graphical objects (11, 12, 2100,2120), and the process set-up component can be virtually structured on the mechanical plane and the respective mechanical or physical process set-up features can be allocated to the graphical objects (11, 2, 2100, 2120);
wherein the configuration machine is further coupled to and formed for controlling:
a selection device for selecting the structural elements;
a display device for visually displaying graphical objects (11, 12, 2100, 2120) allocated to the structural elements, wherein the graphical objects are visually integrated together for virtually structuring the process set-up component;
a linking database which is set up to store linking references for logically severing or logically setting up allocations to properties and/or functions allocated to the graphical objects (11, 12, 2100, 2120) via the structural elements, in response to the visual integration; and
an editing/compiling device which is adapted to permit configuring of the control routine graphically by virtually structuring the at least one process set-up component to be controlled, and to implement, via the allocations and linking references occurring in the structural database and linking database, a conversion of the control routine into program code which can be used to control one of the structured, corresponding, real or virtual process set-up components.

10. System as claimed in the preceding claim, wherein the linking database is coupled via the configuration machine to the structural database for transferring stored linking references to the structural database, and the structural database can be expanded by correspondingly adopting and storing in terms of storing structural elements, properties, functions, graphical objects (11, 12, 2100, 120) and allocations thereof.

11. System as claimed in any one of the two preceding claims, wherein based on allocations and linking references occurring in the structural database and linking database, possible structural elements to be visually integrated can be automatically selected for virtual structuring of the process set-up component.

12. System as claimed in any one of the preceding claims 9 to 11, having a configuration and linking tool coupled via the configuration machine for visually integrating graphical objects (11, 12, 2100, 2120) via the display device in a user-initiated manner and/or in a computer-initiated manner.

13. System as claimed in any one of the preceding claims 9 to 12, further comprising a manipulatable display means, by means of which the control routine configured by graphical structuring can be temporally allocated visually at least to a further control routine so that the control routine to be converted into program code can be visually combined with the at least one further control routine for and by the user in a process control sequence.

14. System as claimed in any one of the preceding claims 9 to 13, wherein the structural database and/or linking database is coupled at least temporarily to at least one external data source for adopting description data also of real or already simulated process set-up components,

15. System as claimed in any one of the preceding claims 9 to 14, adapted to process text-based graphical object descriptions and information directly contained in the graphical objects (11, 12, 2100, 2120). in particular relating to allocations concerning location and functional location.

16. System as claimed in any one of the preceding claims 9 to 15, including an automation database for storing control routines which can be selected or retrieved in a user-initiated manner or in a computer-initiated manner for automatically performing a function assigned to a structured process set-up component.

## Revendications

1. Procédé de configuration d'une routine de commande pour la commande d'au moins une composante de création de processus réelle ou virtuelle, dans lequel :
pour la construction graphique virtuelle sur le plan mécanique de l'au moins une composante de création de processus à commander et pour l'attribution de caractéristiques de création de processus mécaniques ou physiques
- une base de données de construction est créée en définissant des éléments de construction, lesquels représentent des unités fonctionnelles spécifiques au processus,
- des propriétés et/ou fonctions sont décrites, lesquelles représentent les caractéristiques de création de processus mécaniques ou physiques effectives de la composante de création de processus réelle ou virtuelle à commander correspondante, et sont sauvegardées associées aux éléments de construction dans la base de données de construction,
**caractérisé en ce que** :
des objets graphiques (11, 12, 2100, 2120) sont décrits et sauvegardés associés aux éléments de construction dans la base de données de construction, et cela de manière à générer également au moyen des éléments de construction une association entre les propriétés et/ou les fonctions et les objets graphiques (11, 12, 2100, 2120), à rendre virtuellement constructible la composante de création de processus sur le plan mécanique et à permettre d'associer aux objets graphiques. (11, 12, 2100, 2120) les caractéristiques de création de processus mécaniques ou physiques respectives,
des éléments de construction étant sélectionnés dans la base de données de construction et les objets graphiques (11, 12, 2100, 2120) associés aux éléments de construction sélectionnés étant visuellement affichés sur un dispositif d'affichage, et étant visuellement intégrés les uns aux autres pour la construction virtuelle de la composante de création de processus, et
les propriétés et/ou les fonctions respectivement sauvegardées associées aux objets graphiques (11, 12, 2100, 2120) étant logiquement associées et reliées les unes aux autres en réaction à l'intégration visuelle, des références de liaison correspondantes pour la coupure logique ou la génération logique d'associations à des propriétés et/ou à des fonctions associées aux objets graphiques (11, 12, 2100, 2120) au moyen des éléments de construction étant sauvegardées dans une base de données de liaison, et une conversion de la routine de commande en code programme pouvant être mis en oeuvre pour la commande d'une composante de création de processus réelle ou virtuelle correspondant à la composante construite étant provoquée au moyen des associations et références de liaison effectuées dans la base de données de construction et la base de données de liaison.

2. Procédé selon la revendication 1, dans lequel des références de liaison sont transmises de la base de données de liaison à la base de données de construction, et la base de données de construction est étendue en conséquence relativement aux éléments de construction, aux propriétés, à la fonction, aux objets graphiques (11, 12, 2100, 2120) et aux associations.

3. Procédé selon l'une des revendications précédentes, dans lequel une sélection d'éléments de construction possibles à intégrer visuellement pour la construction virtuelle de la composante de création de processus est effectuée automatiquement au moyen des associations et références de liaison effectuées dans la base de données de construction et la base de données de liaison, et affichée pour l'utilisateur.

4. Procédé selon l'une des revendications précédentes, dans lequel les objets graphiques (11, 12, 2100, 2120) peuvent être intégrés visuellement les uns aux autres par l'utilisateur et/ou par l'ordinateur ou automatiquement au moyen du dispositif d'affichage.

5. Procédé selon la revendication précédente, dans lequel la routine de commande configurée par construction graphique et à convertir en code programme peut être associée visuellement dans le temps à au moins une autre routine de commande et être visuellement fusionnée avec celle-ci en une séquence de commande de processus pour et par l'utilisateur.

6. Procédé selon l'une des revendications précédentes, dans lequel la base de données de construction et/ou la base de données de liaison sont couplées à des sources de données externes.

7. Procédé selon l'une des revendications précédentes, dans lequel les objets graphiques (11, 12, 2100, 2120) sont décrits textuellement.

8. Procédé selon l'une des revendications précédentes, dans lequel des routines de commande configurées sont sauvegardées dans une base de données d'automatisation et sélectionnées par l'utilisateur ou proposées par le système selon l'invention pour l'exécution automatique d'une fonction affectée à la composante de création de processus construite ou à construire.

9. Système pour la configuration d'une routine de commande pour la commande d'au moins une composante de création de processus réelle ou virtuelle, ledit système comprenant :
une machine de configuration couplée à, et prévue pour commander :
une base de données de construction créée de telle manière que des éléments de construction sont définis, lesquels représentent des unités fonctionnelles spécifiques au processus,
et où
des propriétés et/ou fonctions sont décrites, lesquelles représentent les caractéristiques de création de processus mécaniques ou physiques effectives de la composante de création de processus réelle ou virtuelle à commander correspondante, et sont sauvegardées associées aux éléments de construction,
**caractérisé en ce que** :
des objets graphiques (11, 12, 2100, 2120) sont décrits, lesquels sont associés aux éléments de construction et sont sauvegardés de manière à générer également au moyen des éléments de construction une association entre les propriétés et/ou les fonctions et les objets graphiques (11, 12, 2100, 2120) et à rendre virtuellement constructible la composante de création de processus sur le plan mécanique, et à permettre d'associer aux objets graphiques (11, 12, 2100, 2120) les caractéristiques de création de processus mécaniques ou physiques respectives ;
la machine de configuration étant en outre couplée à, et prévue pour commander :
un dispositif de sélection, destiné à sélectionner les éléments de construction ;
un dispositif d'affichage destiné à afficher visuellement des objets graphiques (11, 12, 2100, 2120) associés aux éléments de construction, les objets graphiques étant visuellement intégrés les uns aux autres pour la construction virtuelle de la composante de création de processus ;
une base de données de liaison, prévue pour sauvegarder des références de liaison pour la coupure logique ou la génération logique d'associations à des propriétés et/ou à des fonctions associées aux objets graphiques (11, 12, 2100, 2120) au moyen des éléments de construction, en réaction à l'intégration visuelle ; et
un dispositif d'édition/de compilation, adapté pour permettre graphiquement une configuration de la routine de commande, par construction virtuelle de l'au moins une composante de création de processus à commander, et provoquer une conversion de la routine de commande en code programme pouvant être mis en oeuvre pour la commande d'une composante de création de processus réelle ou virtuelle correspondant à la composante construite au moyen des associations et références de liaison effectuées dans la base de données de construction et la base de données de liaison.

10. Système selon la revendication précédente, dans lequel la base de données de liaison est couplée par la machine de configuration à la base de données de construction pour la transmission de références de liaison sauvegardées à la base de données de construction, et la base de données de construction peut être étendue par transfert et sauvegarde correspondants relativement à la sauvegarde d'éléments de construction, de propriétés, de fonction, d'objets graphiques (11, 12, 2100, 2120) et aux associations de ceux-ci.

11. Système selon l'une des deux revendications précédentes, dans lequel des éléments de construction possibles à intégrer visuellement pour la construction virtuelle de la composante de création de processus sont automatiquement sélectionnables à partir d'associations et de références de liaison effectuées dans la base de données de construction et la base de données de liaison,

12. Système selon l'une des revendications 9 à 11, avec un outil de configuration et de liaison couplé par la machine de configuration pour l'intégration visuelle par l'utilisateur et/ou par l'ordinateur d'objets graphiques (11, 12, 2100, 2120) au moyen du dispositif d'affichage,

13. Système selon l'une des revendications 9 à 12, comprenant en outre un moyen d'affichage manipulable, avec lequel la routine de commande configurée par construction graphique peut être associée visuellement dans le temps à au moins une autre routine de commande, de telle manière que la routine de commande à convertir en code programme peut être visuellement fusionnée avec l'au moins une autre routine de commande en une séquence de commande de processus pour et par l'utilisateur.

14. Système selon l'une des revendications 9 à 13, dans lequel la base de données de construction et/ou la base de données de liaison sont au moins temporairement couplées à au moins une source de données externes pour la transmission de données de description provenant également de composantes de création de processus réelles ou déjà simulées,

15. Système selon l'une des revendications 9 à 14, adapté pour le traitement de descriptions d'objets graphiques en mode texte et d'informations directement contenues dans les objets graphiques (11, 12, 2100, 2120), concernant en particulier des associations relatives à des emplacements et des emplacements fonctionnels.

16. Système selon l'une des revendications 9 à 15, comprenant une base de données d'automatisation pour la sauvegarde de routines de commande pouvant être sélectionnées ou appelées par l'utilisateur ou par l'ordinateur pour l'exécution automatique d'une fonction affectée à une composante de création de processus construite.
